# EUROPEAN PATENT APPLICATION

(11) **EP 4 239 340 A1**
(43) Date of publication of application: **06.09.2023**
(21) Application number: 21885846.2
(22) Date of filing: 06.10.2021
(51) Int. Cl.: G01N 35/04

(54) **CONTAINER TRANSFER DEVICE**

(30) Priority: 30.10.2020 JP 2020182937
(71) Applicant: Kyoto Electronics Manufacturing Co., Ltd., Kyoto-shi, Kyoto 601-8317 (JP)
(72) Inventor: OKUMURA Naomitsu, Kyoto-shi, Kyoto 601-8317 (JP); WATANABE Nobuaki, Kyoto-shi, Kyoto 601-8317 (JP)
(74) Representative: Cabinet Beau de Loménie
(86) International application number: PCT/JP2021/037001
(87) International publication number: WO 2022/091727

(57) **Abstract**

Provided is a container transfer device that allows a container to be easily exchanged when the container is located in an exchange area and that can reliably prevent unintentional lifting of the container by fixing the container so as to prevent the container from escaping upward when the container is located in a sampling area. A container transfer device 5A includes a rotating table 31 on which a container 200 accommodating a sample is placed and which moves the container 200 between an exchange area (K) and a sampling area (S), a holding body 32 holding the container 200 placed on the rotating table 31 to allow the container 200 to be pulled out upward, and a movable body 33 fixing the container 200 to prevent the container 200 from escaping upward in the sampling area (S).

## Description

### TECHNICAL FIELD

The present invention relates to a container transfer device that transfers a container accommodating a sample of a liquid, such as a chemical or a beverage.

### BACKGROUND ART

There is a known automated analyzer for continuously analyzing components of a sample or the like, which is configured to extract the sample in a container at a sampling position (see Patent Document 1, for example). There is another known automated analyzer provided with a dispensing mechanism that sucks a liquid sample directly from a closed container (see Patent Document 2, for example).

The automated analyzer according to Patent Document 1 includes an open-top sample storage, a sample disk rotatably disposed in the sample storage, and a front lid covering the opening of the sample storage. The sample disk has a plurality of holes. A plurality of containers accommodating a sample is placed on the sample disk while being inserted into the holes, respectively. An inner lid is integrated with the front lid to be slidable relative to the front lid. When the opening of the sample storage is closed with the front lid, the inner lid is in contact with the opening of each container and can keep the container sealed, and only the inner lid can be moved to be separated from the opening of the container. In the automated analyzer according to Patent Document 1, the sample disk is rotated, whereby a container for which dispensing is to be performed is moved to a dispensing position. At the dispensing position, a sampling probe is inserted into the container through through holes respectively provided in the front lid and the inner lid, so that a sample in the container can be sucked by means of the sampling probe.

The dispensing mechanism provided in the automated analyzer according to Patent Document 2 includes a nozzle with a sharp tip that can penetrate through a rubber stopper closing the opening of a container, and is configured to cause the nozzle to penetrate through the rubber stopper and suck a liquid sample in the container. A plurality of containers accommodating the liquid sample is placed on a rack disposed on a transport mechanism. A stopper is attached to the rack to be located above the containers in order to prevent each container from being pulled up by friction generated between the nozzle and the rubber stopper in an operation of pulling out the nozzle performed after the operation of sucking the liquid sample in the container. The stopper has a nozzle through hole smaller than the outer diameter of each container. The container that is about to rise together with the nozzle comes into contact with a lower surface of the stopper, which thereby prevents it from being unintentionally lifted.

### CITATION LIST

### PATENT LITERATURE

Patent Document 1: Japanese Unexamined Patent Application Publication No. 2003-215134
Patent Document 2: Japanese Unexamined Patent Application Publication No. 2010-25804

### SUMMARY OF INVENTION

### TECHNICAL PROBLEM

In the automated analyzer according to Patent Document 1, fixation of all the containers placed on the sample disk by the inner lid is released by the detachment of the front lid from the sample storage, so that these containers can easily be exchanged. Meanwhile, when the front lid is attached to the sample storage, all the containers placed on the sample disk can be fixed by the inner lid. However, in this configuration in which fixation of all the containers placed on the sample disk by the inner lid and release of fixation are achieved by attaching the front lid to the sample storage and detaching the front lid, all the containers placed on the sample disk are not fixed if the attaching of the front lid to the sample storage is forgotten. Therefore, if the sample disk is rotated in a state in which the attaching of the front lid is forgotten, the containers may be tilted, or the positions of the containers may be shifted. When the sampling probe is inserted into any of the containers in this state, the sampling probe may interfere with the container, and the sampling probe and/or the container may be broken. Even if the interference between the sampling probe and the container is avoided, measurement may be made impossible because of a failure to suck out a sample.

In the automated analyzer according to Patent Document 2, lifting of the container in the operation of pulling out the nozzle performed after the suction of the liquid sample can be prevented by the stopper attached to the rack. However, the containers placed on the rack cannot be exchanged unless the stopper is detached. Therefore, the stopper has to be detached prior to the exchange of the container. It is troublesome to detach the stopper, and the container cannot be exchanged easily.

The present invention has been made in view of the above problems. It is an object of the present invention to provide a container transfer device that allows a container to be easily exchanged when the container is located in an exchange area, and that can reliably prevent unintentional lifting of the container by fixing the container so as to prevent the container from escaping upward when the container is located in a sampling area.

### SOLUTION TO PROBLEM

To achieve the above object, a container transfer device according to the present invention is characterized by including:
a rotating table on which a container accommodating a sample is placed and which moves the container between an exchange area and a sampling area;
a holding body holding the container placed on the rotating table to allow the container to be pulled out upward; and
a fixing unit fixing the container to prevent the container from escaping upward in the sampling area.

According to the container transfer device having this configuration, the container accommodating the sample is placed on the rotating table and is moved between the exchange area and the sampling area. The container placed on the rotating table is held by the holding body to be able to be pulled out upward. When the container is located in the exchange area, the container placed on the rotating table can be pulled out from the holding body by being lifted, and can easily be exchanged. When the container is located in the sampling area, the container is fixed by the fixing unit so as not to be pulled out upward. Therefore, in the case where the opening of the container is closed with a sealing member, for example, when a nozzle that can penetrate through the sealing member is pulled out after the suction of the sample in the container by means of the nozzle arranged to penetrate through the sealing member, the fixing member can prevent the container from being pulled up due to friction generated between the nozzle and the sealing member, thus preventing unintentional lifting of the container.

In the container transfer device according to the present invention, it is preferable that,
the container has a constricted portion, and
the fixing unit is configured to fix the container to prevent the container from escaping upward by catching a movable body movable relative to the constricted portion in the constricted portion.

According to the container transfer device having this configuration, the fixing unit is configured to fix the container to prevent upward escape of the container by catching the movable body movable relative to the constricted portion of the container in the constricted portion of the container. This configuration can reliably prevent unintentional lifting of the container and enables, for example, a plate-like member that can enter the constricted portion of the container to be used as the movable body. Accordingly, the device can be made thin.

It is preferable that the container transfer device according to the present invention further includes a switch unit switching between a caught state and an uncaught state of the movable body with respect to the constricted portion of the container in the sampling area and the exchange area.

According to the container transfer device having this configuration, the caught state and the uncaught state of the movable body with respect to the constricted portion of the container are switched by the switch unit in the sampling area and the exchange area. In the sampling area, the switch unit performs switching to the caught state where the movable body is caught in the constricted portion of the container. Accordingly, unintentional lifting of the container can be prevented by the movable body more reliably. In the exchange area, the switch unit performs switching to the uncaught state where the movable body is not caught in the constricted portion of the container. Accordingly, it is possible to easily pull out the container from the holding body by lifting the container placed on the rotating table. Container exchange can thus be performed easily.

In the container transfer device according to the present invention, it is preferable that the switch unit includes
a biasing member biasing the movable body toward the constricted portion of the container, and
a cam moving the movable body in a direction in which the movable body is separated from the constricted portion of the container in the exchange area by using a rotary power for rotating the rotating table.

According to the container transfer device having this configuration, when the container placed on the rotating table has been moved to the exchange area by rotation of the rotating table, part of the rotary power for rotating the rotating table is converted by the cam to a driving force for driving the movable body in the direction in which the movable body is separated from the constricted portion of the container. Thus, the movable body is moved so as to be separated from the constricted portion of the container and is placed in the uncaught state where the movable body is not caught in the constricted portion of the container. Further, when the container on the rotating table has been moved from the exchange area to the sampling area, the movable body biased toward the constricted portion of the container moves toward the constricted portion of the container and is caught in the constricted portion of the container, thereby being fixed so as not to escape upward. As described above, only by rotating the rotating table on which the container is placed to move the container between the exchange area and the sampling area, it is possible to automatically switch between the uncaught state where the movable body is not caught in the constricted portion of the container and the caught state where the the movable body is caught in the constricted portion of the container.

It is preferable that the container transfer device according to the present invention further includes a pin member maintaining the uncaught state of the movable body with respect to the container in the exchange area.

According to the container transfer device having this configuration, the pin member is included for maintaining the uncaught state of the movable body with respect to the container in the exchange area. With this configuration, the state in which the container can be pulled out upward from the holding body is reliably maintained by the pin member in the exchange area. Therefore, container exchange can be performed in a more stable manner in the exchange area.

In the container transfer device according to the present invention, it is preferable that the pin member is attached to the holding body to be movable up and down,
the pin member is configured to, when being at a lowered position, engage with the movable body to maintain the uncaught state and, when being at a raised position, disengage from the movable body not to maintain the uncaught state, and
a pin push-up block is further included for pushing up the pin member to the raised position in the sampling area by using the rotary power for rotating the rotating table.

According to the container transfer device having this configuration, when the container on the rotating table is located in the exchange area, the pin member attached to the holding body to be movable up and down is lowered by a gravitational action to be located at the lowered position. When being located at the lowered position, the pin member engages with the movable body, whereby the uncaught state where the movable body is not caught in the constricted portion of the container is maintained. When the container on the rotating table has been moved to the sampling area by rotation of the rotating table, part of the rotary power for rotating the rotating table is converted by the pin push-up block to the driving force for raising the pin member to the raised position. The pin member is thus pushed up to the raised position. When being located at the raised position, the pin member disengages from the movable body, and the uncaught state is not maintained, that is, the movable body is placed in the caught state where it is caught in the constricted portion of the container. The container is thus fixed so as not to escape upward. As described above, only by rotating the rotating table on which the container is placed to move the container from the exchange area to the sampling area, it is automatically switch from the uncaught state where the movable body is not caught in the constricted portion of the container to the caught state where the movable body is caught in the constricted portion of the container.

### BRIEF DESCRIPTION OF DRAWINGS

FIG. 1 is a perspective view of a whole automated analyzer provided with a container transfer device according to a first embodiment of the present invention, when viewed from the front side.
FIG. 2 is a cross-sectional view along line A-A in FIG. 1.
FIG. 3 is a plan view of a rotating body with a plurality of containers placed thereon.
FIGS. 4(a) and 4(b) are cross-sectional views of a main portion along line C-C in FIG. 3 and show an uncaught state and a caught state, respectively.
FIG. 5 is an overall perspective view of the rotating body with no container placed thereon.
FIG. 6 is an exploded perspective view of a portion of the rotating body between a rotating table and a holding body.
FIG. 7 is an exploded perspective view of a portion of the rotating body between the holding body and a plurality of movable bodies.
FIG. 8 is a plan view of the rotating body with no container placed thereon, in which the movable body is partially broken.
FIG. 9(a) is a cross-sectional view of a main portion along line E-E in FIG. 8, and FIG. 9(b) is a cross-sectional view of a main portion along line F-F in FIG. 8.
FIG. 10 is an enlarged view of a portion B in FIG. 2. FIG. 11 is an overall perspective view of the rotating body with a plurality of containers placed thereon.
FIGS. 12(a) and (b) are enlarged views of a portion D in FIG. 5, and respectively show a state when a pin member is located at a lowered position and a state when the pin member is located at a raised position.
FIG. 13 is a perspective view of a whole automated analyzer provided with a container transfer device according to a second embodiment of the present invention, when viewed from the front side.

### DESCRIPTION OF EMBODIMENTS

The present invention is described below with reference to the drawings. In the following embodiments, an automated analyzer is described as an example which is provided with a container transfer device according to the present invention transferring a container accommodating a sample of a liquid, such as a chemical or a beverage. However, the present invention is not intended to be limited to the configurations shown in the embodiments described below and the drawings.

### [First Embodiment]

### <Overall Configuration of Automated Analyzer>

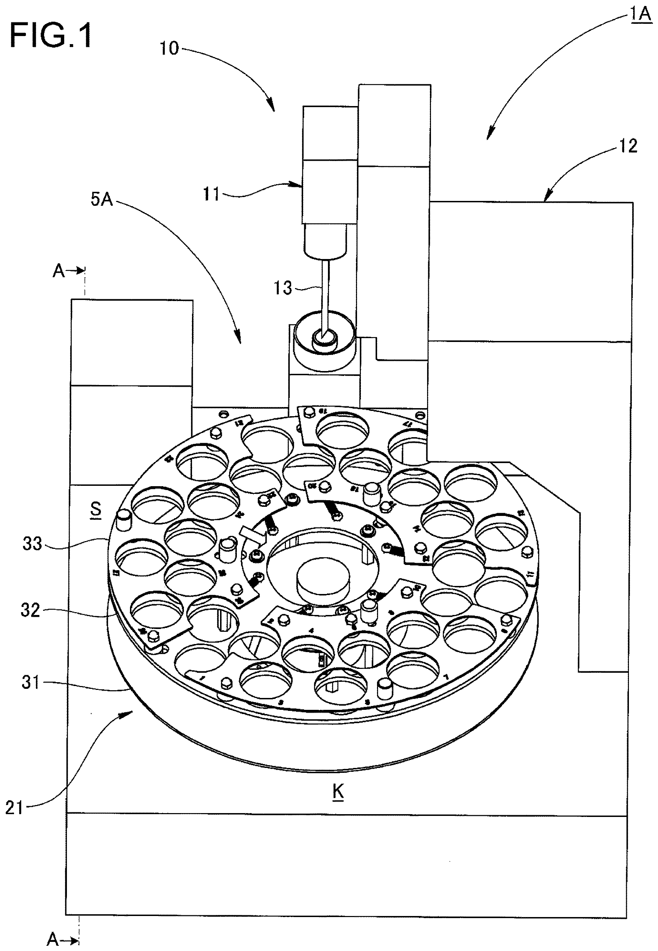

FIG. 1 is a perspective view of a whole automated analyzer 1A provided with a container transfer device 5A according to a first embodiment of the present invention, when viewed from the front side. The automated analyzer 1A shown in FIG. 1 includes the container transfer device 5A that transfers a container accommodating a sample between an exchange area and a sampling area and a dispensing device 10 that sucks the sample from the container and dispenses the sample in the sampling area. The definition of the exchange area and the sampling area will be described in detail later. Further, the shape and structure of the container used in this example will also be described in detail later.

### <Dispensing Device>

The dispensing device 10 is configured to include a nozzle unit 11 and a driving unit 12 and is disposed in a rear right corner of a casing 20 described later in the container transfer device 5A. The nozzle unit 11 includes a nozzle 13 with a sharp tip (lower end) extending in the vertical direction and is configured to be able to suck and discharge a sample via the nozzle 13. The driving unit 12 is a combination of a Y-axis driving mechanism for linearly moving the nozzle unit in the horizontal Y-axis direction (front-back direction) and a Z-axis driving mechanism for linearly moving the nozzle unit in the vertical Z-axis direction (vertical direction), although the description based on detailed illustration is omitted. The driving unit 12 is configured to be able to move the nozzle unit 11 in two directions including the front-back direction and the vertical direction.

### <Container Transfer Device>

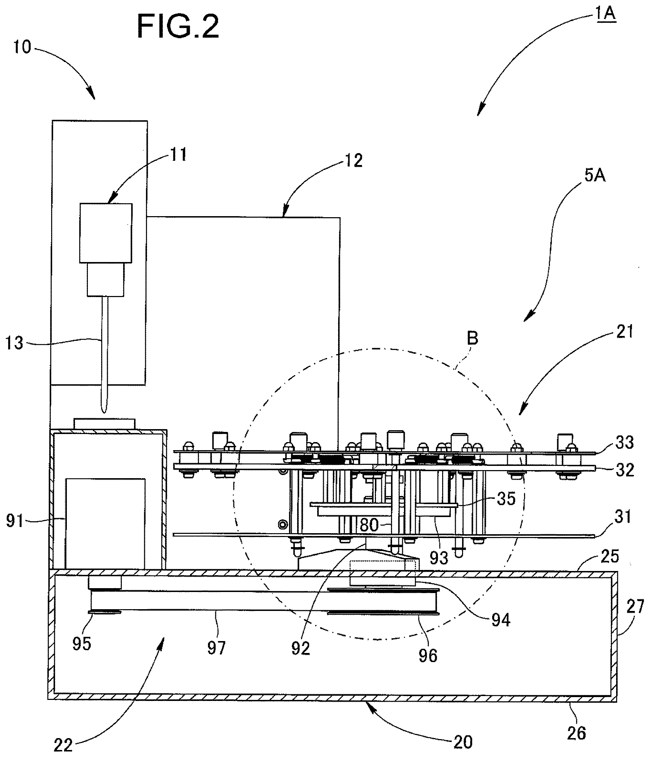

FIG. 2 is a cross-sectional view along line A-A in FIG. 1. As shown in FIG. 2, the container transfer device 5A includes the casing 20, a rotating body 21 arranged above the casing 20, and a rotary driving mechanism 22 arranged inside the casing 20. The casing 20 is configured by a top plate 25 and a bottom plate 26 that are arranged in the vertical direction with a predetermined interval therebetween and are rectangular in plan view, and a frame body 27 arranged to connect the outer circumferences of the top plate 25 and the bottom plate 26 to each other.

### <Exchange Area and Sampling Area>

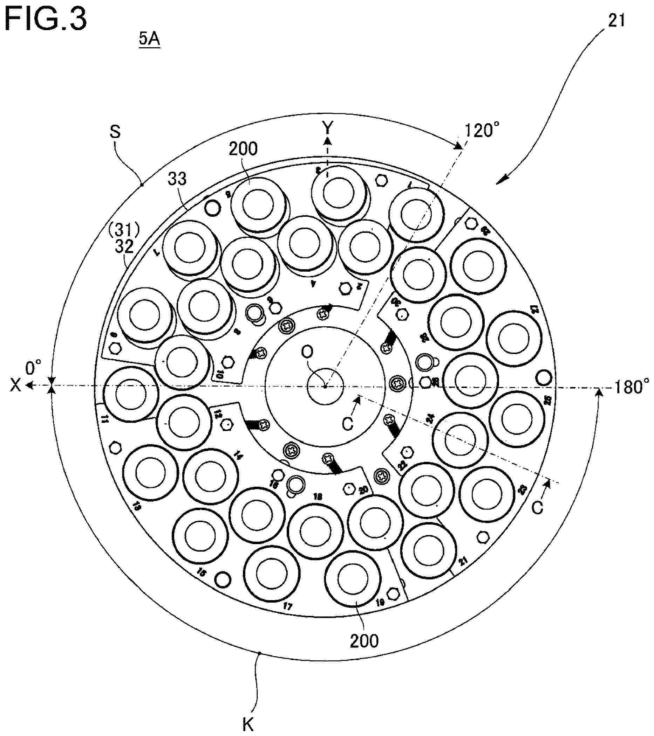

FIG. 3 is a plan view of the rotating body 21 with a plurality of containers 200 placed thereon. As shown in FIG. 3, the rotating body 21 moves the containers 200 between an exchange area and a sampling area. Here, in plan view of the rotating body 21, the X and Y orthogonal axes are set with the center of rotation of the rotating body 21 coincident with the origin O, the axis extending in the left-right direction is defined as the X-axis with its left side set as the positive side, the axis extending in the front-back direction is the Y-axis with its back side set as the positive side, and the clockwise direction around the origin O is defined as a forward rotation direction (forward direction) with the positive side of the X-axis regarded as a reference (0°). In this case, an area of rotation from 0° to 120° inclusive in the rotating body 21 is defined as the sampling area (a range denoted with symbol "S" and a double arrow in FIG. 3) for extracting a sample from the container 200, and an area of rotation more than 180° and less than 360° in the rotating body 21 is defined as the exchange area (a range denoted with symbol "K" and a double arrow in FIG. 3) for exchanging the container 200, for example. As for the sampling area and the exchange area, the numerical ranges of angles are not limited to the ranges exemplified above, and can be appropriately set by adjusting the number of disposed movable bodies 33 described later, the circumferential length of each movable body 33, and the like.

### <Container and Constricted Portion>

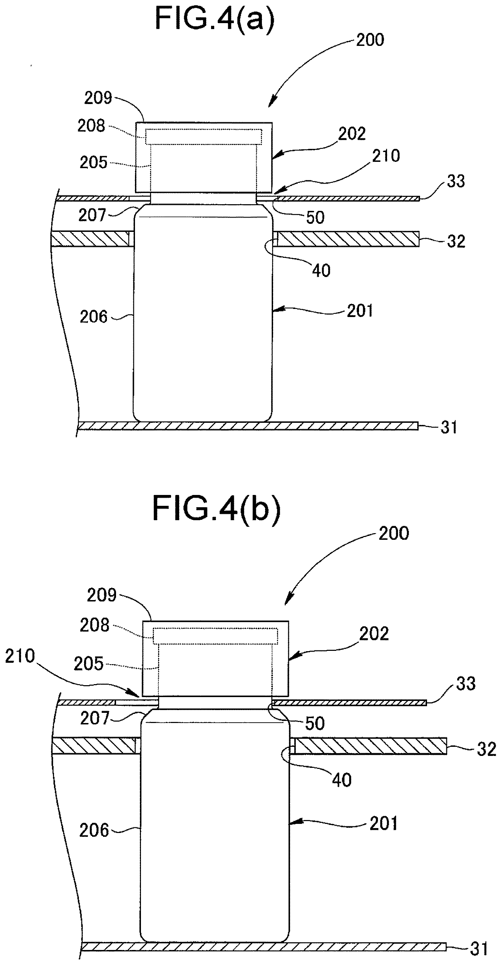

FIGS. 4(a) and 4(b) are cross-sectional views of a main portion along line C-C in FIG. 3 and respectively show an uncaught state and a caught state. As shown in FIG. 4(a), the container 200 is configured by a container main body 201 and a lid 202. The container main body 201 has a cylindrical portion 205 forming an opening open upward, a bottomed cylindrical portion 206 that is larger than the cylindrical portion 205 in diameter and can accommodate a sample, and a sloping portion 207 connecting the cylindrical portion 205 and the bottomed cylindrical portion 206 to each other. The bottomed cylindrical portion 206, the sloping portion 207, and the cylindrical portion 205 are contiguously provided to be integrated together from bottom to top in this order. The lid 202 has a sealing member 208 covering the opening of the cylindrical portion 205 and a sealing-member holding portion 209 that holds the sealing member 208 with the center portion of the sealing member 208 in plan view exposed to outside. An external thread formed on the outer circumferential surface of the cylindrical portion 205 and an internal thread formed on the inner circumferential surface of the sealing-member holding portion 209 are screwed together to tighten the lid 202, whereby the container main body 201 can be closed and sealed with the lid 202. In the container 200, a constricted portion 210 is formed by the boundary between the cylindrical portion 205 and the sloping portion 207 and upper and lower adjacent portions of the boundary (a portion between the bottomed cylindrical portion 206 and the lid 202).

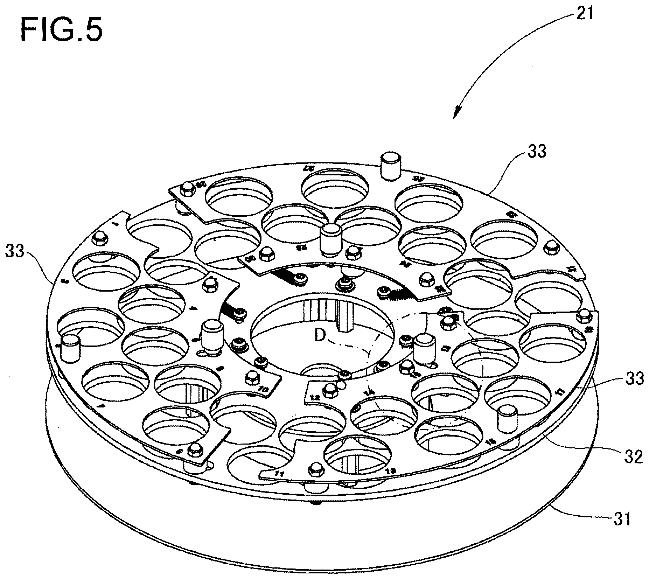

FIG. 5 is an overall perspective view of the rotating body 21 with no container placed thereon. As shown in FIG. 5, the rotating body 21 includes a rotating table 31, a holding body 32, and a plurality of movable bodies 33.

### <Rotating Table>

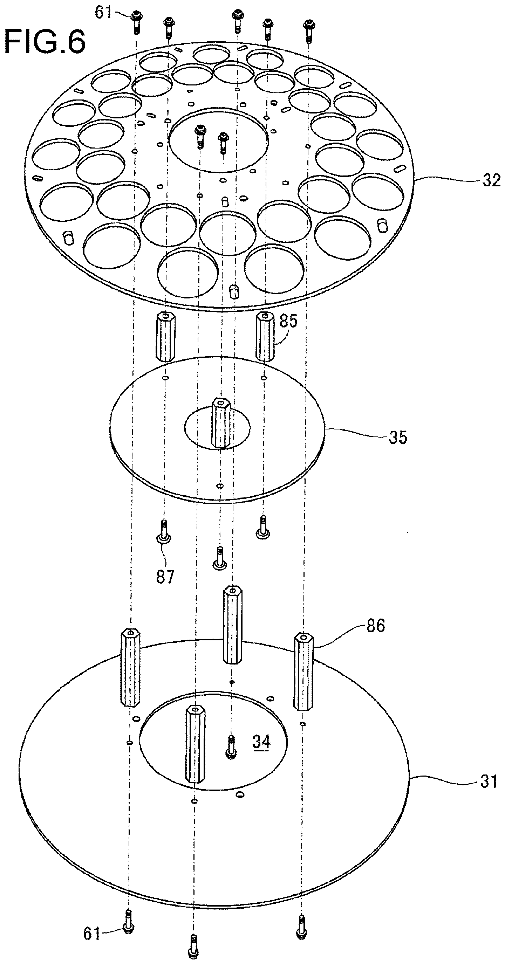

FIG. 6 is an exploded perspective view of a portion of the rotating body 21 between the rotating table 31 and the holding body 32. As shown in FIG. 6, the rotating table 31 is configured by a hollow disc-like member with a predetermined thickness which has a placing surface with a sufficient area allowing a plurality of (30 at maximum in the present embodiment) containers 200 to be placed at the same time. A center opening 34 in the shape of a circular hole is formed at the center of the rotating table 31 to have a size that allows a rotor 93 described later to pass therethrough. A support disc 35 is provided between the rotating table 31 and the holding body 32.

### <Holding Body>

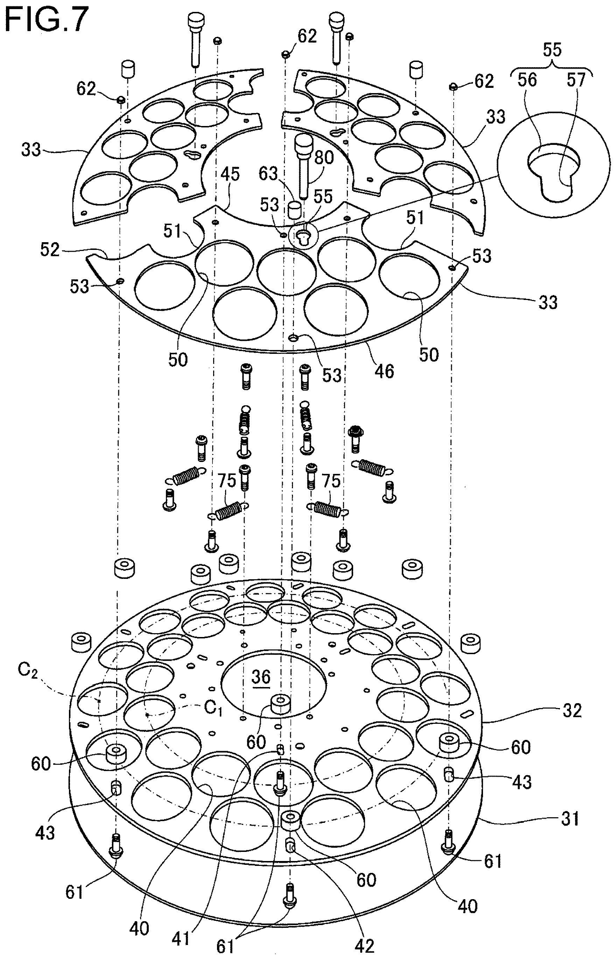

FIG. 7 is an exploded perspective view of a portion of the rotating body 21 between the holding body 32 and the movable bodies 33. As shown in FIG. 7, the holding body 32 is configured by a hollow disc-like member. A center opening 36 in the shape of a circular hole is formed at the center of the holding body 32. A plurality of (30 in the present embodiment) holding-body through holes 40 in the shape of circular holes is formed in a flat surface of the holding body 32 between a portion near the inner periphery surrounding the center opening 36 and the outer circumference, and penetrates through the flat surface in the vertical direction.

The holding-body through holes 40 provided in the holding body 32 are regularly arranged to form two concentric circles in the radial direction. That is, in the flat surface of the holding body 32 between the portion near the inner periphery and the outer circumference, 15 holding-body through holes 40 are arranged equiangularly (every 24°) in an annular band-like region close to the portion near the inner periphery in such a manner that the center of each holding-body through hole 40 is coincident with a point on the circumference of a first-pitch circle [C₁] around the center of the holding body 32. Also, in the flat surface of the holding body 32 between the portion near the inner periphery and the outer circumference, 15 holding-body through holes 40 are arranged equiangularly (every 24°) in another annular band-like region close to the outer circumference in such a manner that the center of each holding-body through hole 40 is coincident with a point on the circumference of a second-pitch circle [C₂] around the center of the holding body 32, the second-pitch circle being larger than the first-pitch circle [C₁]. These 30 holding-body through holes 40 in total are arranged toward the circumferential direction in a staggered manner, i.e., are alternately shifted in the radial direction of the holding body 32 one by one toward the circumferential direction, so that the through holes 40 are aligned along the circumferential direction as a whole. Accordingly, while the holding body 32 can be made compact, more containers 200 can be held.

An opening area of each holding-body through hole 40 is set to an area that allows the bottomed cylindrical portion 206 of the container main body 201 (see FIG. 4 (a)) to be inserted therethrough. The container 200 can thus be inserted into and removed from the holding-body through hole 40 in the vertical direction. In addition, while the bottomed cylindrical portion 206 of the container main body 201 is inserted through the holding-body through hole 40, the bottomed cylindrical portion 206 is surrounded by the inner circumferential surface of the holding-body through hole 40. In this manner, the holding body 32 holds the container 200 placed on the rotating table 31 so as to allow the container 200 to be pulled out upward, while the bottomed cylindrical portion 206 of the container main body 201 is inserted through the holding-body through hole 40.

Three inner main slits 41 in total are formed every 120° in the circumferential direction in a portion of the holding body 32 close to the portion near the inner periphery. The inner main slits 41 extend in the radial direction and have a shape of a rounded rectangle. Three outer main slits 42 in total are formed every 120° in the circumferential direction in a portion of the holding body 32 close to the outer periphery. The outer main slits 42 extend in the radial direction and have a shape of a rounded rectangle. Each outer main slit 42 and a corresponding inner main slit 41 are arranged in the radial direction with a predetermined interval therebetween. Further, six sub slits 43 in total in the shape of a rounded rectangle are formed in the portion of the holding body 32 close to the outer periphery. The sub slits 43 are arranged on one side and the other side of each outer main slit 42 in the circumferential direction to be parallel thereto with a predetermined interval therebetween.

### <Movable Body>

A plurality of (three in the present embodiment) movable bodies 33 is provided above the holding body 32 to be arranged along the circumferential direction of the holding body 32. Each movable body 33 is configured by a partial annular member with a predetermined thickness which extends along the circumferential direction of the holding body 32 to cover a region slightly smaller than about one-third of a total region of the holding body 32 in the plan view. The partial annular member has an inner arc portion 45 and an outer arc portion 46. The inner arc portion 45 has an arc length corresponding to a sector arc having a radius slightly larger than the radius of the center opening 36 of the holding body 32 and a central angle of about 110°. The outer arc portion 46 corresponds to a sector arc having a radius about the same as the radius of the holding body 32 and a central angle of about 110°. The movable body 33 can move relative to the constricted portion 210 of the container 200 and serves as a fixing unit that fixes the container 200 so as to prevent the container 200 from escaping upward by being caught in the constricted portion 210.

A plurality of (seven in the present embodiment) movable-body through holes 50 in the shape of circular holes is formed in a flat surface of the movable body 33 between a portion near the partial inner periphery and the partial outer circumference, and penetrates through the flat surface in the vertical direction. The movable-body through holes 50 provided in the movable body 33 are regularly arranged to form two concentric circles in the radial direction. That is, in the flat surface of the movable body 33 between the portion near the partial inner periphery and the partial outer circumference, three movable-body through holes 50 are arranged equiangularly (every 24°) in a partial annular band-like region close to the portion near the partial inner periphery in such a manner that the center of each movable-body through hole 50 is coincident with a point on the circumference of the first-pitch circle [C₁] around the center of the holding body 32 in plan view, when the movable body 33 is located at an uncaught position described later. Further, four movable-body through holes 50 are arranged equiangularly (every 24°) in another partial annular band-like region in the flat surface of the movable body 33 between the portion near the partial inner periphery and the partial outer circumference, which is close to the partial outer circumference, in such a manner that the center of each movable-body through hole 50 is coincident with a point on the circumference of the second-pitch circle [C₂] around the center of the holding body 32 in plan view, when the movable body 33 is located at an uncaught position described later. The second-pitch circle is larger than the first-pitch circle. These seven movable-body through holes 50 in total are arranged in a staggered manner toward the circumferential direction, i.e., are alternately shifted in the radial direction of the movable body 33 one by one toward the circumferential direction, so that the through holes 50 are aligned along the circumferential direction as a whole. The size of each of the seven movable-body through holes 50 provided in the movable body 33 is set to be the same as the size of the movable-body through holes 50 provided in the holding body 32.

Large arc notches 51 are formed at both ends in the circumferential direction of the partial annular band-like region close to the partial inner periphery of the movable body 33 with one large arc notch 51 at each end. The large arc notch 51 has an arc length exceeding a half of the total circumferential length of the movable-body through hole 50. Further, at one end in the circumferential direction of the partial annular band-like region close to the partial outer circumference of the movable body 33 is formed a small arc notch 52 having an arc length of about one-fourth of a length less than a half of the total circumferential length of the movable-body through hole 50.

Small through holes 53 are formed in the portion near the partial inner periphery and the portion near the partial outer periphery of the movable body 33 to respectively correspond to the inner main slits 41, the outer main slits 42, and the sub slits 43 provided in the holding body 32. A heteromorphic hole 55 is formed near the center in the circumferential direction of the portion near the partial inner periphery of the movable body 33. The heteromorphic hole 55 has an arc hole portion 56 arranged close to the inner arc portion 45 and having a central angle of larger than 180° and a rounded half rectangular hole portion 57 extending from the arc hole portion 56 toward the outer arc portion 46 to be continuous with the arc hole portion 56. The rounded half rectangular portion 57 is approximately half of a rounded rectangle in the longitudinal direction.

A sliding member 60 is interposed between the holding body 32 and the movable body 33 to be located between the inner main slit 41 of the holding body 32 and the small through hole 53 of the movable body 33 corresponding to that inner main slit 41. The holding body 32 and the movable body 33 are secured together by a fastener formed by a pan head screw 61 penetrating through the inner main slit 41, the sliding member 60, and the small through hole 53 and a cap nut 62 screwed to the screw shaft of the pan head screw 61. Further, the sliding member 60 is interposed between the holding body 32 and the movable body 33 to be located between the outer main slit 42 of the holding body and the small through hole 53 of the movable body 33 corresponding to that outer main slit 42. The holding body 32 and the movable body 33 are secured together by a fastener formed by the pan head screw 61 penetrating through the outer main slit 42, the sliding member 60, and the small through hole 53 and a knob 63 also serving as a cap nut screwed to the screw shaft of the pan head screw 61. Furthermore, the sliding member 60 is interposed between the holding body 32 and the movable body 33 to be located between the sub slit 43 of the holding body 32 and the small through hole 53 of the movable body 33 corresponding to that sub slit 43. The holding body 32 and the movable body 33 are secured together by a fastener formed by the pan head screw 61 penetrating through the sub slit 43, the sliding member 60, and the small through hole 53 and the cap nut 62 screwed to the screw shaft of the pan head screw 61.

### <Biasing Member>

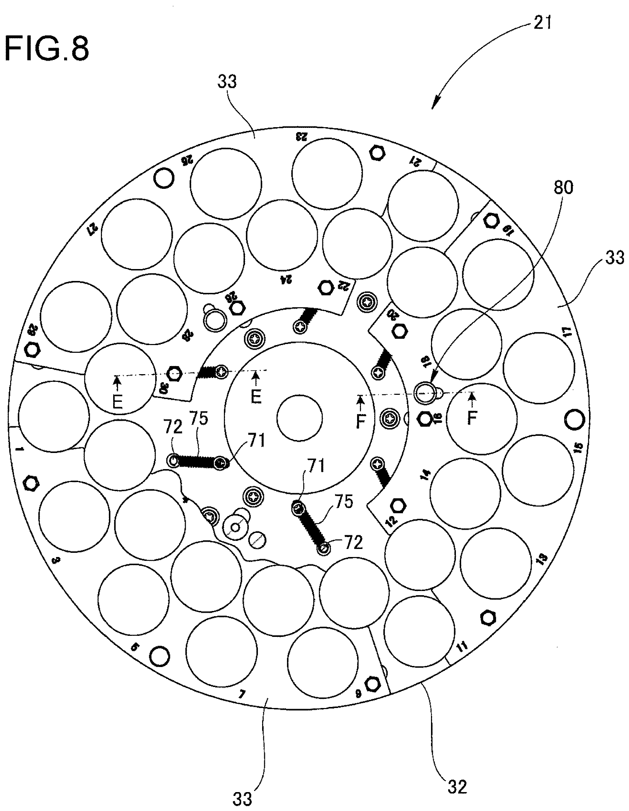

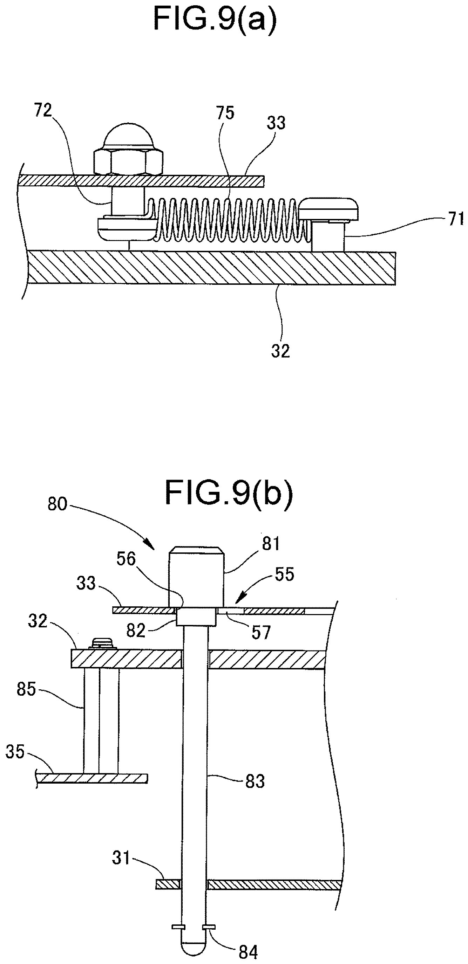

FIG. 8 is a plan view of the rotating body 21 with no container placed thereon, in which the movable body 33 is partially broken. FIG. 9(a) is a cross-sectional view of a main portion along line E-E in FIG. 8, and FIG. 9 (b) is a cross-sectional view of a main portion along line F-F in FIG. 8. As shown in FIGS. 8 and 9(a), six columnar standing pins 71 are arranged to stand equiangularly (every 60°) in the circumferential direction in the portion near the inner periphery of the holding body 32. A hanging pin 72 is provided to hang down at each end in the circumferential direction of the movable body 33 at a position close to the portion near the partial inner periphery of the movable body 33. An extension spring 75 is provided between the standing pin 71 and the hanging pin 72 in a hanging manner. As shown in FIG. 8, a pair of extension springs 75 is arranged between each movable body 33 and the holding body 32 in such a manner that the distance between them is increased toward the outer circumference. Due to this arrangement, a resultant force (vector) of elastic forces of the extension springs 75 acts toward the center of the holding body 32 along the radial direction of the holding body 32. The extension spring 75 serves as a biasing member that biases the movable member 33 toward the constricted portion 210 of the container 200 (see FIG. 4(a)).

### <Pin Member>

As shown in FIGS. 8 and 9(b), a pin member 80 is provided in the rotating body 21 to be movable up and down in association with each movable body 33. As shown in FIG. 9(b), the pin member 80 has a large-diameter shaft portion 81, a small-diameter shaft portion 82, and an elongated shaft portion 83, which are contiguously provided to be integrated together in this order from top to bottom with those axial centers coincident with each other. In the pin member 80, the small-diameter shaft portion 82 can fit into the arc hole portion 56 of the heteromorphic hole 55 provided in the movable body 33. The outer diameter and the height of the large-diameter shaft portion 81 are set to such values that the large-diameter shaft portion 81 can be placed on the peripheral portion of the arc hole portion 56 when the small-diameter shaft portion 82 fits into the arc hole portion 56, and can be pinched with fingers. The elongated shaft portion 83 extends in the vertical direction to penetrate through the holding body 32 and the rotating table 31 and is supported by the holding body 32 and the rotating table 31 so as to be movable in the vertical direction and not to be movable in the horizontal direction. A stopper 84 that can come into contact with the lower surface of the rotating table 31 is attached to the lower end of the elongated shaft portion 83. When the pin member 80 is pulled up from a state in which the small-diameter shaft portion 82 fits into the arc hole portion 56 and the large-diameter shaft portion 81 is placed on the peripheral portion of the arc hole portion 56, the small-diameter shaft portion 82 escapes from the arc hole portion 56 and becomes a non-fitting state, and the pin member 80 is about to be further pulled up, the stopper 84 comes into contact with the lower surface of the rotating table 31 to stop the operation of further pulling up the pin member 80, thereby preventing the elongated shaft portion 83 from escaping from the rotating table 31.

As shown in FIG. 6, the support disc 35 and the portion of the holding body 32 near the inner periphery of the holding body 32 are secured together with the necessary pan head screws 61 and countersunk screws 87 via three inner hexagonal columnar members 85 arranged between the support disc 35 and the holding body 32 equiangularly (every 120°) in the circumferential direction. Further, the portion of the holding body 32 close to the portion near the inner periphery thereof and the rotating table 31 are secured together with the necessary pan head screws 61 via four outer hexagonal columnar members 86 arranged between the holding body 32 and the rotating table 31 equiangularly (every 90°) in the circumferential direction. The support disc 35 is fixed to the rotor 93 described later to be detachable. A rotary power from the rotor 93 is transmitted to the rotating table 31 via the support disc 35, the three inner hexagonal columnar members 85, the holding body 32, and the four outer hexagonal columnar members 86.

As shown in FIG. 4(a), the holding body 32 is arranged at the height corresponding to an upper portion of the bottomed cylindrical portion 206 of the container main body 201 of the container 200 placed on the rotating table 31 through the movable-body through hole 50 and the holding-body through hole 40. Further, the movable body 33 is arranged at the height corresponding to the constricted portion 210 of the container 200.

### <Uncaught Position and Caught Position>

As shown in FIG. 7, the holding body 32 and the movable body 33 are secured together by means of a fastener with the required sliding members 60 interposed therebetween. With this configuration, the movable body 33 is slidable together with the sliding member 60 relative to the holding body 32 in a direction in which the inner main slit 41 and the outer main slit 42 extend, that is, in the radial direction of the holding body 32, and is reciprocatable between an uncaught position and a caught position along the radial direction of the holding body 32. The uncaught position of the movable body 33 is a position at which the movable body 33 is not caught in the constricted portion 210 of the container 200 placed on the rotating table 31 through the movable-body through hole 50 and the holding-body through hole 40, as shown in FIG. 4(a). That is, the uncaught position is a position of the movable body 33 relative to the holding body 32 at which the position of the movable-body through hole 50 provided in the movable body 33 and the position of the holding-body through hole 40 provided in the holding body 32 are coincident with each other in plan view, and the position of each of the large arc notch 51 and the small arc notch 52 (see FIG. 7) provided in the movable body 33 and the position of the holding-body through hole 40 provided in the holding body 32 are coincident with each other in plan view. Further, the caught position of the movable body 33 is a position at which the movable body 33 is caught in the constricted portion 210 of the container 200. That is, the caught position is a position of the movable body 33 relative to the holding body 32 at which the movable body 33 has moved from the uncaught position by a predetermined distance toward the center of the holding body 32 along the radial direction of the holding body 32, and a peripheral portion of each of the movable-body through hole 50, the large arc notch 51, and the small arc notch 52 (see FIG. 7) provided in the movable body 33 enters into the constricted portion 210 of the container 200.

### <Rotary Driving Mechanism>

As shown in FIG. 2, the rotary driving mechanism 22 includes a driving motor 91, a rotary shaft 92, and the rotor 93. The driving motor 91 is disposed in a rear left corner of the casing 20 in such a manner that the output shaft of the driving motor 91 penetrates through the top plate 25 of the casing 20 and reaches the inside of the casing 20. The rotary shaft 92 extends in the vertical direction to be coaxial with the rotating body 21 and is arranged to penetrate through the top plate 25 of the casing 20 with a predetermined center distance from the output shaft of the driving motor 91. The rotary shaft 92 is supported by the top plate 25 of the casing 20 via a bearing member 94 to be rotatable. A driving timing pulley 95 is fixed to the output shaft of the driving motor 91. A driven timing pulley 96 is fixed to the lower end of the rotary shaft 92. A timing belt 97 is wound around the driving timing pulley 95 and the driven timing pulley 96. The rotor 93 is fixed to the upper end of the rotary shaft 92 to be coaxial with the rotary shaft 92. The support disc 35 in the rotating body 21 is fixed to the rotor 93 to be coaxial therewith and detachable therefrom. In the rotary driving mechanism 22, a rotary power from the output shaft of the driving motor 91 is transmitted to the rotating body 21 via the driving timing pulley 95, the timing belt 97, the driven timing pulley 96, the rotary shaft 92, and the rotor 93. Accordingly, the rotating body 21 can be rotated in the forward direction and the reverse direction by forward rotation and reverse rotation of the driving motor 91.

### <Pin Push-Up Block>

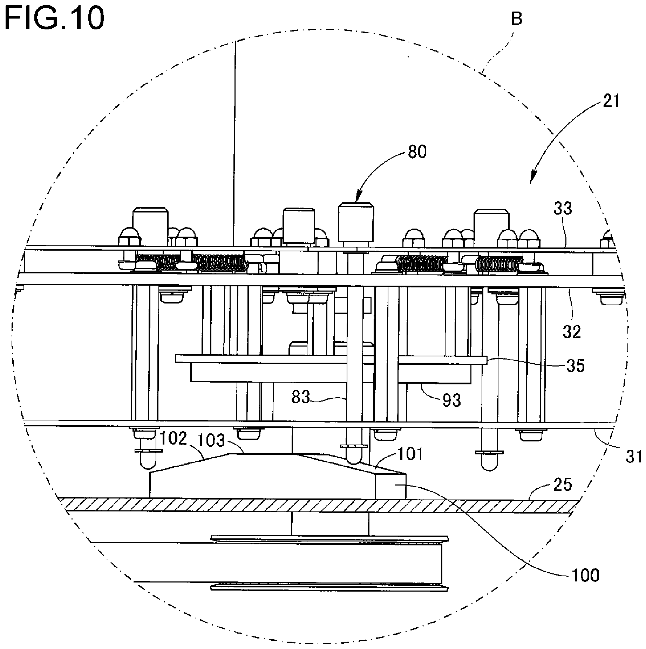

FIG. 10 is an enlarged view of a portion B in FIG. 2. A pin push-up block 100 is placed and fixed on a portion of the top plate 25 of the casing 20 corresponding to the sampling area in the rotating body 21. The block 100 is contactable with the lower end of the elongated shaft portion 83 of the pin member 80 projecting from the lower surface of the rotating table 31. The pin push-up block 100 is configured by a block member in the shape of a rectangle in plan view parallel to the tangential direction of the rotating table 31. The pin push-up block 100 has a first inclined surface portion 101 inclined upward toward the forward direction of the rotating body 21, a second inclined surface portion 102 inclined upward toward the reverse direction of the rotating body 21, and a horizontal surface portion 103. The first inclined surface portion 101, the horizontal surface portion 103, and the second surface portion 102 are arranged in this order toward the forward direction of the rotating body 21. During rotation of the rotating body 21 in the forward direction, the first inclined surface portion 101 comes into contact with the lower end of the elongated shaft portion 83 of the pin member 80 that moves together with the rotating body 21 and is located at a lowered position, and pushes up the pin member 80 to a raised position in association with rotation of the rotating body 21. During rotation of the rotating body 21 in the reverse direction, the second inclined surface portion 102 comes into contact with the lower end of the elongated shaft portion 83 of the pin member 80 that moves together with the rotating body 21 and is located at the lowered position, and pushes up the pin member 80 to the raised position in association with rotation of the rotating body 21. The pin member 80 located at the lowered position is thus pushed up to the raised position by rotation of the rotating body 21 in the forward direction and in the reverse direction, while being moved in the sampling area.

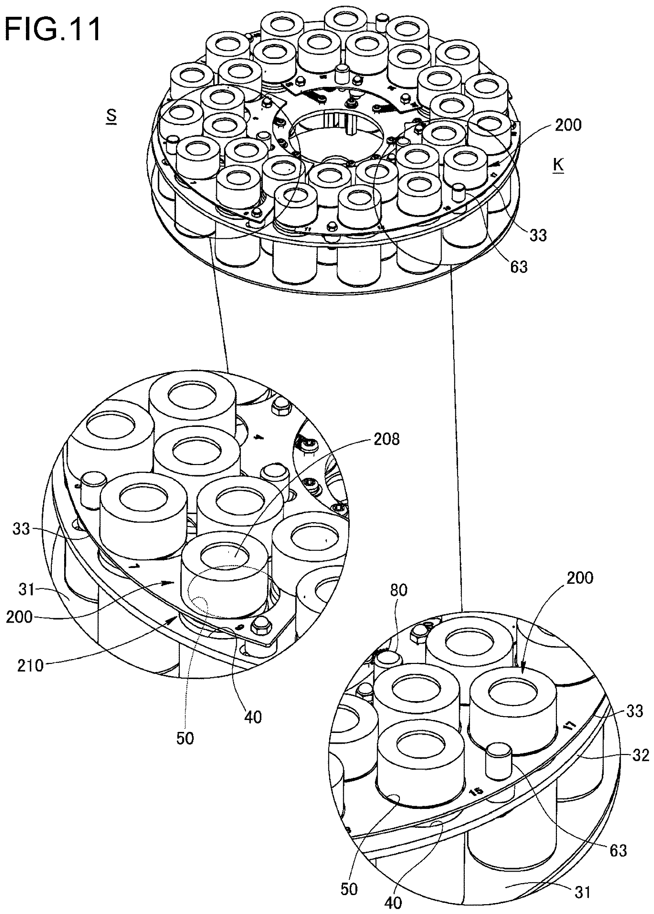

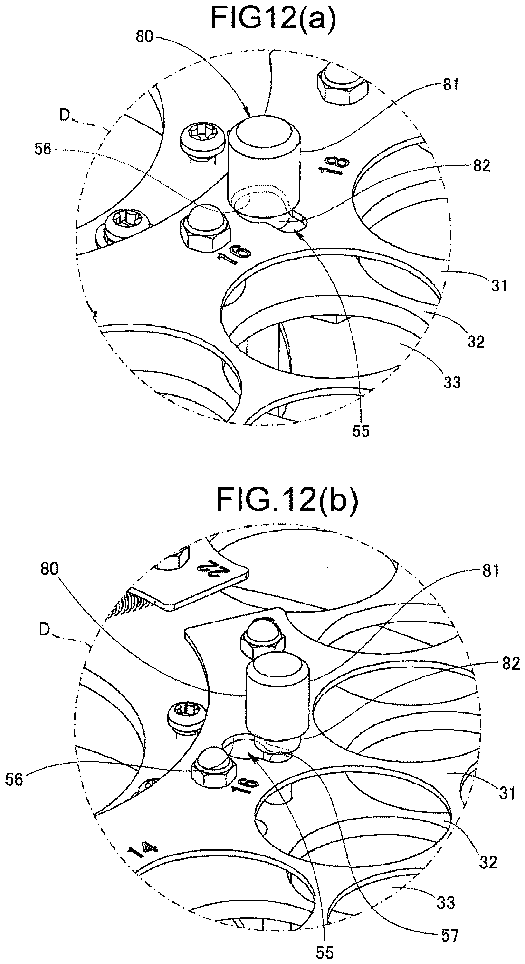

An operation of the automated analyzer 1A having the above-described configuration is described. FIG. 11 is an overall perspective view of the rotating body 21 with the containers 200 placed thereon. FIGS. 12(a) and (b) are enlarged views of a portion D in FIG. 5 and respectively show a state when the pin member 80 is located at a lowered position and a state when the pin member 80 is located at a raised position.

As shown in FIG. 11, when the container 200 is exchanged, the movable body 33 located in the exchange area (K) is moved to the uncaught position by a manual operation to be placed in an uncaught state. That is, the knob 63 of the movable body 33 located in the exchange area (K) is pinched with fingers and is operated so as to separate the movable body 33 from the center of rotation of the rotating body 21, whereby the movable body 33 is moved to the uncaught position. The uncaught state where the movable body 33 is not caught in the constricted portion of the container 200 is thus obtained.

As shown in FIG. 12 (a), when the movable body 33 has been moved to the uncaught position, the position of the arc hole portion 56 of the heteromorphic hole 55 and the position of the small-diameter shaft portion 82 of the pin member 80 are coincident with each other in plan view, and the pin member 80 is lowered by the gravitational force acting on the pin member 80 to a position (the lowered position) at which the lower surface of the large-diameter shaft portion 81 of the pin member 80 (a step surface between the large-diameter shaft portion 81 and the small-diameter shaft portion 82) comes into contact with the peripheral portion of the arc hole portion 56 of the heteromorphic hole 55. When the pin member 80 is located at the lowered position, the small-diameter shaft portion 82 of the pin member 80 fits into the arc hole portion 56 of the heteromorphic hole 55, whereby the pin member 80 engages with the movable body 33. In this state, even if the movable body 33 is biased toward the center of the holding body 32 by a pair of extension springs 75 (see FIG. 8), the movable body 33 is locked by the pin member 80 so as not to move from the uncaught position. The uncaught state is thus maintained. Accordingly, as shown in the partial enlarged view around the container 200 located in the exchange area in FIG. 11, a state in which the container 200 can be pulled out upward from the holding body 32 is reliably maintained by the pin member 80, and thus a state where exchange of the container 200 can be performed in a more stable manner is achieved. Then, in the exchange area (K), the container 200 currently placed on the rotating table 31, for example, for which sampling of a sample has been done, is pulled out upward, and the new container 200 for which sampling of a sample is to be carried out is placed on the rotating table 31 through the movable-body through hole 50 and the holding-body through hole 40. The containers 200 are exchanged with each other in this manner.

After the containers 200 are exchanged in the exchange area (K) as described above, the rotating body 21 is rotated in the forward direction by the rotary driving mechanism 22 (see FIG. 2), whereby the container 200 is moved to the sampling area (S). The pin member 80 that has been moved to the sampling area (S) passes over the pin push-up block 100, as shown in FIG. 10. When the pin member 80 passes over the pin push-up block 100, the first inclined surface portion 101 of the pin push-up block 100 comes into contact with the lower end of the elongated shaft portion 83 of the pin member 80 located at the lowered position. At this time, part of a rotary power for rotating the rotating body 21 is converted to a driving force for raising the pin member 80 to the raised position by the first inclined surface portion 101 of the pin push-up block 100. Accordingly, the pin member 80 is raised toward the raised position. When the pin member 80 is raised and reaches a position (the raised position) at which the small-diameter shaft portion 82 of the pin member 80 escapes from the arc hole portion 56 of the heteromorphic hole 55 as shown in FIG. 12(a), the pin member 80 disengages from the movable body 33, and the movable body 33 biased toward the center of the holding body 32 by a pair of extension springs 75 (see FIG. 8) is allowed to move to the caught position due to the presence of the rounded half rectangular portion 57 of the heteromorphic hole 55, thereby being moved to the caught position. Accordingly, as shown in the partial enlarged view around the container 200 located in the sampling area in FIG. 11, when the movable body 33 has been moved to the caught position, the peripheral portion of each of the movable-body through hole 50, the large arc notch 51, and the small arc notch 52 (see FIG. 7) provided in the movable body 33 enters into the constricted portion 210 of the container 200 (FIG. 11 only shows a state in which the peripheral portion of the movable-body through hole 50 has entered into the constricted portion 210). Thus, a caught state where the movable body 33 is caught in the constricted portion 210 of the container 200 is obtained. Then, a sample accommodated in the container 200 as a sampling target, for which the movable body 33 is caught, is dispensed. That is, by control of driving of the driving unit 12 (see FIG. 1), the nozzle unit 11 is positioned in such a manner that the nozzle 13 is located above the container 200 as the sampling target, and is then lowered to a position at which the nozzle 13 can suck the sample in the container 200 through the sealing member 208. The sample in the container 200 is then sucked by a suction operation by the nozzle unit 11. After the suction operation, the nozzle unit 11 is raised so as to pull out the nozzle 13 from the sealing member 208. At this time, the container 200 is about to be raised together with the nozzle 13 due to friction generated between the nozzle 13 and the sealing member 208. When the container 200 is located in the sampling area (S), the container 200 is fixed so as not to escape upward by the movable body 33 caught in the constricted portion 210 of the container 200, as shown in the partial enlarged view around the container 200 located in the sampling area in FIG. 11. Therefore, the movable body 33 can prevent the container 200 from being pulled up due to friction generated between the nozzle 13 and the sealing member 208 in the operation of pulling out the nozzle 13 performed after suction of the sample in the container 200. Consequently, unintentional lifting of the container 200 can be prevented. This effect of preventing lifting of a container can be achieved by the configuration in which the movable body 33 formed by a relatively thin plate-like member capable of entering into the constricted portion 210 of the container 200 is caught in the constricted portion 210 of the container 200. Therefore, the device (the rotating body 21) can be made thin.

According to the container transfer device 5A of the above-described automated analyzer 1A, the movable body 33 is automatically placed in the caught state with regard to the container 200 in the sampling area, so that the container 200 is fixed so as not to escape upward. It is thus possible to reliably prevent fixation of the container 200 from being forgotten. Further, in the exchange area, container exchange can easily be performed by an operation of insertion and removal of the container 200 to/from the holding body 32. Accordingly, safety of the container exchange work can be improved. Furthermore, the rotating body 21 can easily be attached and detached by fixing the support disc 35 with respect to the rotor 93 and release of fixing of the support disc 35, so that maintainability can be improved. In addition, by preparing a plurality of types of rotating bodies 21 for various containers 200, the device can be applied to the various containers 200 only by changing the rotating bodies 21.

Further, in the container transfer device 5A, the ranges of the exchange area and the sampling area can be adjusted by adjustment of the number of the disposed movable bodies 33 and the length in the circumferential direction of the movable body 33.

### [Second Embodiment]

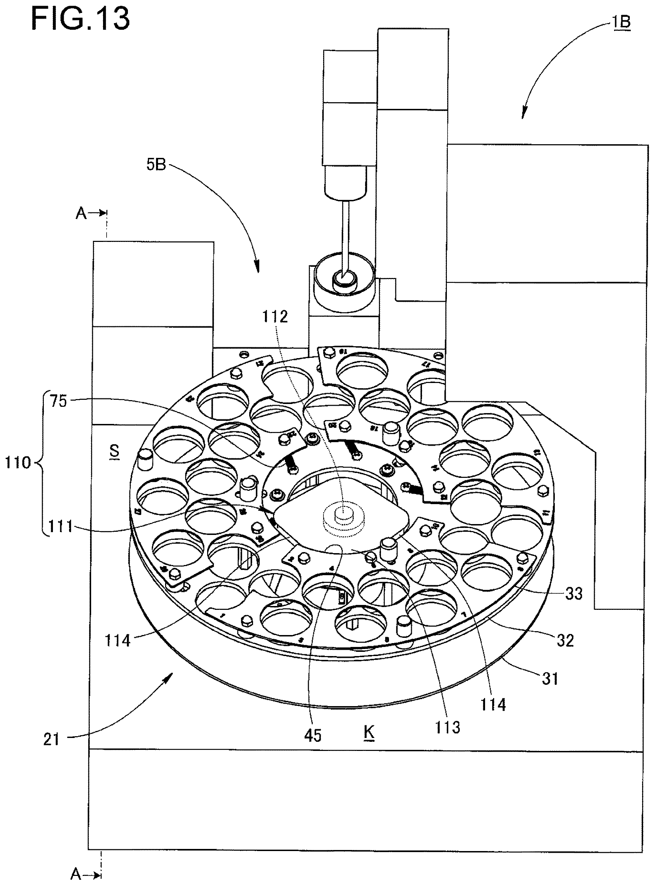

FIG. 13 is a perspective view of a whole automated analyzer 1B provided with a container transfer device 5B according to a second embodiment of the present invention, when viewed from the front side. In the second embodiment, the same or similar component as/to that in the first embodiment is labelled with the same reference sign in FIG. 13, and the detailed description thereof is omitted. In the following description, characteristic portions of the second embodiment are mainly described.

In the automated analyzer 1B according to the second embodiment shown in FIG. 13, the container transfer device 5B includes a switch unit 110 that automatically switches between the caught state and the uncaught state of the movable body 33 with respect to the constricted portion 210 of the container 200 in the sampling area (S) and the exchange area (K).

### <Switch Unit>

The switch unit 110 is configured by the extension spring 75 as a biasing member that biases the movable body 33 toward the constricted portion 210 of the container 200 and a cam 111 that moves the movable body 33 by using a rotary power for rotating the rotating body 21 so as to separate the movable body 33 from the constricted portion 210 of the container 200 in the exchange area (K).

### <Cam>

The cam 111 is configured by a plate-like member with a predetermined thickness in an approximately fan shape around the center of the holding body 32, the central angle of the fan shape being about 90°. The cam 111 is arranged at such a height that the cam 111 can come into contact with the inner arc portion 45 of the movable body 33 in the exchange area (K) in a hollow center portion of the rotating body 21 formed in the shape of a hollow disc as a whole. The cam 111 is fixed to the upper end of a support shaft 112 disposed to penetrate through the shaft center of each of the rotor 93 and the rotary shaft 92 (see FIG. 2) in the rotary driving mechanism 22 and to be fixed above the bottom plate 26 of the casing 20.

The cam 111 has a swelling portion 113 formed in the central position in the circumferential direction and non-swelling portions 114 respectively formed on both sides of the swelling portion 113. The swelling portion 113 is formed in a round swelling shape in such a manner that the swelling portion 113 spreads from a first virtual circle with a radius the same as the distance between the inner arc portion 45 of the movable body 33 located at the caught position and the center of the holding body 32 in plan view, to a second virtual circle having a radius the same as the distance between the inner arc portion 45 of the movable body 33 located at the uncaught position and the center of the holding body 32 in plan view. The non-swelling portion 114 is formed in such a shape that it extends in the tangential direction of the holding body 32 inside the first virtual circle.

In the automated analyzer 1B having the above-described configuration, when the movable body 33 in the rotating body 21 rotated in the forward direction by the rotary driving mechanism 22 has been moved from the sampling area (S) to the exchange area (K), the swelling portion 113 of the cam 111 comes into contact with the inner arc portion 45 of the movable body 33, so that part of the rotary power for rotating the rotating body 21 is converted by the cam 111 to a driving force for driving the movable body 33 in a direction in which the movable body 33 is separated from the constricted portion 210 of the container 200. The movable body 33 is thus moved to the uncaught position in the direction in which it is separated from the constricted portion 210 of the container 200, whereby the uncaught state where the movable body 33 is not caught in the constricted portion 210 is obtained. When the movable body 33 has been moved to the uncaught position, the position of the arc hole portion 56 of the heteromorphic hole 55 and the position of the small-diameter shaft portion 82 of the pin member 80 are coincident with each other in plan view as shown in FIG. 12(a), and the pin member 80 is lowered to a position (the lowered position) at which the lower surface of the large-diameter shaft portion 81 of the pin member 80 (the step surface between the large-diameter shaft portion 81 and the small-diameter shaft portion 82) comes into contact with the peripheral portion of the arc hole portion 56 of the heteromorphic hole 55, due to the gravitational force acting on the pin member 80. When the pin member 80 is located at the lowered position, the small-diameter shaft portion 82 of the pin member 80 fits into the arc hole portion 56 of the heteromorphic hole 55, whereby the pin member 80 attached to the rotating table 31 and the holding body 32 to be movable up and down engages with the movable body 33. In this state, even if the movable body 33 is biased toward the center of the holding body 32 by a pair of extension springs 75 (see FIG. 8), the movable body 33 is locked by the pin member 80 so as not to move from the uncaught position, so that the uncaught state is maintained. Accordingly, a state where the container 200 can be pulled out upward from the holding body 32 is reliably maintained by the pin member 80, and a state where exchange of the container 200 can be performed in a more stable manner is obtained. Then, in the exchange area (K), the container 200 currently placed on the rotating table 31, for which sampling of a sample has been done, is pulled out upward, and the new container 200 for which sampling of a sample is to be performed is placed on the rotating table 31 through the movable-body through hole 50 and the holding-body through hole 40. The containers 200 are thus exchanged with each other.

After the above-described container exchange in the exchange area (K), when the rotating body 21 has been rotated in the forward direction by the rotary driving mechanism 22 to move the container 200 to the sampling area (S), the pin member 80 is raised toward the raised position due to an action of the pin push-up block 100 and disengages from the movable body 33 as shown in FIG. 12(b), and the movable body 33 biased toward the center of the holding body 32 by a pair of extension springs 75 (see FIG. 8) is moved to the caught position, as in the automated analyzer 1A according to the first embodiment. Consequently, the caught state is obtained in which the peripheral portion of each of the movable-body through hole 50, the large arc notch 51, and the small arc notch 52 provided in the movable body 33 enters into the constricted portion 210 of the container 200, and the movable body 33 is caught in the constricted portion 210. Accordingly, the container 200 can be prevented by the movable body 33 from being pulled up in an operation of pulling out the nozzle 13 performed after suction of the sample in the container 200, so that unintentional lifting of the container 200 can be prevented surely.

In the automated analyzer 1B, the uncaught state where the movable body 33 is not caught in the constricted portion 210 of the container 200 and the caught state where the movable body 33 is caught in the constricted portion 210 of the container 200 can be automatically switched only by rotating the rotating body 21 with the container 200 placed on the rotating table 31 in the forward direction (or in the reverse direction) and moving the container 200 between the exchange area (K) and the sampling area (S).

The embodiments of the container transfer device according to the present invention have been described above. However, the present invention is not limited to the configurations described in the above embodiments, and the configuration can be modified as appropriate without departing from the gist of the present invention.

### INDUSTRIAL APPLICABILITY

The container transfer device according to the present invention is applicable for use in transferring a container accommodating a sample of a liquid, such as a chemical or a beverage, in research institutes, inspection institutes, universities, hospitals, pharmaceutical manufacturers, industrial chemical manufacturers, cosmetics manufacturers, food manufacturers, and the like.

### DESCRIPTION OF REFERENCE SIGNS

1A, 1B automated analyzer
5A, 5B container transfer device
31 rotating table
32 holding body
33 movable body (fixing unit)
75 extension spring (biasing member)
80 pin member
100 pin push-up block
110 switch unit
111 cam
200 container
210 constricted portion
K exchange area
S sampling area

## Claims

1. A container transfer device comprising:
a rotating table on which a container accommodating a sample is placed and which moves the container between an exchange area and a sampling area;
a holding body holding the container placed on the rotating table to allow the container to be pulled out upward; and
a fixing unit fixing the container to prevent the container from escaping upward in the sampling area.

2. The container transfer device of claim 1, wherein the container has a constricted portion, and
the fixing unit is configured to fix the container to prevent the container from escaping upward by catching a movable body movable relative to the constricted portion in the constricted portion.

3. The container transfer device of claim 2, further comprising a switch unit switching between a caught state and an uncaught state of the movable body with respect to the constricted portion of the container in the sampling area and the exchange area.

4. The container transfer device of claim 3, wherein the switch unit includes
a biasing member biasing the movable body toward the constricted portion of the container, and
a cam moving the movable body in a direction in which the movable body is separated from the constricted portion of the container in the exchange area by using a rotary power for rotating the rotating table.

5. The container transfer device of claim 3 or 4, further comprising a pin member maintaining the uncaught state of the movable body with respect to the container in the exchange area.

6. The container transfer device of claim 5, wherein the pin member is attached to the holding body to be movable up and down,
the pin member is configured to, when being at a lowered position, engage with the movable body to maintain the uncaught state and, when being at a raised position, disengage from the movable body not to maintain the uncaught state, and
a pin push-up block is further included for pushing up the pin member to the raised position in the sampling area by using a rotary power for rotating the rotating table.
